(19) Europäisches Patentamt

European Patent Office

Office européen des brevets

(11) **EP 0 670 628 B1**

(12) **FASCICULE DE BREVET EUROPEEN**

(45) Date de publication et mention de la délivrance du brevet:
**09.09.1998 Bulletin 1998/37**

(51) Int Cl.⁶: **H02P 7/622**

(21) Numéro de dépôt: **95810118.0**

(22) Date de dépôt: **22.02.1995**

(54) **Dispositif d'alimentation pour moteur électrique à courant alternatif**

Stromversorgungsvorrichtung für einen Wechselstrommotor

Device for supplying power to an alternating current motor

(84) Etats contractants désignés:
**AT BE CH DE ES GB IT LI NL SE**

(30) Priorité: **04.03.1994 FR 9402536**
**27.07.1994 FR 9409311**

(43) Date de publication de la demande:
**06.09.1995 Bulletin 1995/36**

(73) Titulaire: **SOMFY**
**F-74300 Cluses (FR)**

(72) Inventeurs:
• **Orsat, Jean-Michel**
**F-74300 Chatillon/Cluses (FR)**

• **Vanderschaeghe, Christian**
**F-74300 Cluses (FR)**

(74) Mandataire: **Meylan, Robert Maurice et al**
**c/o BUGNION S.A.**
**10, route de Florissant**
**Case Postale 375**
**1211 Genève 12 - Champel (CH)**

(56) Documents cités:
**DE-A- 4 010 572**        **US-A- 4 706 180**

# Description

La présente invention a pour objet un dispositif d'alimentation pour moteur électrique à courant alternatif monophasé à deux enroulements, comprenant un générateur de courant travaillant par modulation de largeur d'impulsion de manière à engendrer dans le moteur un courant alternatif de forme quasi sinusoïdale.

Un tel dispositif est décrit dans la revue "INTELLIGENT MOTION PROCEEDING" de juin 1993, pages 230 à 236. Ce dispositif est destiné à alimenter un moteur à induction monophasé à phase auxiliaire et condensateur de déphasage. La tension alternative délivrée par le générateur équipé d'un modulateur de largeur d'impulsion "PWM", modulable en fréquence et en tension, est appliquée aux bornes des deux enroulements du moteur de manière conventionnelle, c'est-à-dire de la même manière que la tension du réseau est appliquée aux bornes d'un moteur à induction à phase auxiliaire et condensateur de déphasage conventionnel. Ce dispositif d'alimentation connu permet de commander la vitesse du moteur.

Il est connu depuis très longtemps que l'utilisation d'un condensateur de déphasage pour l'obtention d'un champ tournant nécessaire à l'entraînement du rotor du moteur ne permet jamais d'obtenir en permanence le déphasage idéal de $\pi/2$ qui permettrait d'atteindre le rendement optimum susceptible d'être obtenu au moyen d'un moteur biphasé. En effet, le rendement variant tout au long de la courbe de fonctionnement du moteur, il ne peut être qu'approximatif et varier au gré de l'utilisation, c'est-à-dire au gré de la charge appliquée. Dans le cas d'un moteur alimenté par un générateur PWM tel que décrit dans la revue citée plus haut, le rendement présente des variations encore plus importante, ce rendement variant avec la variation de la fréquence de la tension d'alimentation, le condensateur de déphasage ne pouvant être adapté que pour une fréquence déterminée. Si le moteur est adapté pour fonctionner à basse vitesse, c'est-à-dire avec une alimentation à basse fréquence, le condensateur de déphasage doit être de forte capacité, donc volumineux et coûteux. Dans ce même cas, la tension variant conjointement avec la fréquence pour conserver les mêmes conditions de flux, le dispositif d'alimentation ne peut alimenter des moteurs-freins dans lequel un frein est débloqué par un flux, dévié du moteur, créé par la tension d'alimentation. En effet, la tension devant chuter aux basses fréquences, elle devient rapidement insuffisante pour maintenir le frein débloqué.

De plus, il est dans tous les cas nécessaire de disposer, suivant la phase d'alimentation du moteur, d'un inverseur de courant pour inverser le sens de rotation du moteur.

La présente invention a pour but de réaliser une alimentation de moteur monophasé à deux enroulements permettant d'obtenir un réglage variable de la vitesse et l'inversion du sens de marche à la fois à moindre coût et avec de meilleurs performances.

Ce but est atteint par les caractéristiques de la revendication 1.

Dans le cas, évoqué jusqu'ici, d'un moteur à induction, ce but est atteint en n'alimentant que l'enroulement auxiliaire par le générateur de courant à PWM et en alimentant l'enroulement principal exclusivement par la source de courant alternatif, en particulier le réseau. Le déphasage entre la tension du réseau et la tension délivrée par le générateur peut sans autre être maintenue à la valeur fixe de $\pi/2$. Le condensateur de déphasage est ainsi supprimé.

Dans certains cas, on aura recours à une autre valeur du déphasage pour modifier la caractéristique couple-vitesse du moteur.

Il est possible de faire varier la courbe de fonctionnement du moteur, pour l'adapter à des conditions particulières d'utilisation, comme celle, par exemple, d'une utilisation avec un frein mécanique à déblocage centrifuge, tel que décrit dans les brevets US 3 038 109 et US 3 582 741, qui requiert un couple plus important au démarrage. Il est en outre sans autre possible d'utiliser un moteur frein tel que décrit plus haut.

La méthode d'alimentation selon l'invention peut également être utilisée pour alimenter un moteur à courant alternatif à collecteur, avec induit et inducteur bobinés. Des courbes de fonctionnement différentes peuvent être obtenues selon que c'est le bobinage de l'induit ou celui de l'inducteur qui est relié à la sortie du générateur de courant.

Compte tenu de cette application générale de la méthode selon l'invention, le dispositif d'alimentation selon l'invention, telle que définie à la revendication 1, est caractérisé en ce que ledit générateur de courant alternatif est relié à un seul des enroulements du moteur, que l'autre enroulement est relié exclusivement et directement à une source de courant alternatif monophasé, et que ledit générateur est agencé pour que la fréquence fondamentale du courant issu du générateur soit égale à la fréquence de la source de courant alternatif.

Le dispositif d'alimentation selon l'invention ne concerne donc pas les moteurs à collecteur de type série ou moteurs universels.

Dans tous les cas, le dispositif selon l'invention permet d'inverser le sens de rotation du moteur avec un simple courant de commande et permet par conséquent de se passer d'inverseur bipolaire de puissance.

L'invention donne en outre naissance à un nouveau type de moteur alternatif à collecteur dans lequel le déphasage physique des balais peut être supprimé, ce décalage étant obtenu électriquement et pouvant être ajusté automatiquement en fonction du régime du moteur.

Dans ce même cas, l'invention permet de dimensionner le moteur pour un fonctionnement à bas régime, les vitesses élevées étant obtenues par diminution de la tension alternative aux bornes de l'inducteur alimenté dans ce cas par le générateur de courant.

Le dessin annexé représente, à titre d'exemple, quelques modes d'exécution de l'invention.

La figure 1 représente un circuit d'alimentation d'un moteur monophasé à induction à phase auxiliaire.

La figure 2 représente le schéma d'un mode d'exécution du générateur de courant alternatif par modulation de largeur d'impulsion.

La figure 3 représente, à titre de rappel, le principe connu de la modulation en largeur d'impulsion PWM.

La figure 4 illustre l'obtention d'une tension, par la même méthode, d'une tension quasi sinusoïdale d'amplitude d'environ deux fois plus faible que sur la figure 3.

La figure 5 représente la même tension quasi sinusoïdale qu'à la figure 4, mais avec une composante continue, susceptible d'être obtenue par le générateur de la figure 2.

La figure 6 représente quelques exemples de courbes couple-vitesse d'un moteur à induction obtenues au moyen du dispositif selon la figure 1 par la seule variation de l'amplitude de la tension appliquée à la phase auxiliaire.

La figure 7 représente des exemples de caractéristiques obtenues avec le même moteur, mais par la variation combinée de l'amplitude de la tension alternative et de la composante continue.

La figure 8 représente l'alimentation d'un moteur à collecteur, induit et inducteur bobinés selon un premier mode de branchement.

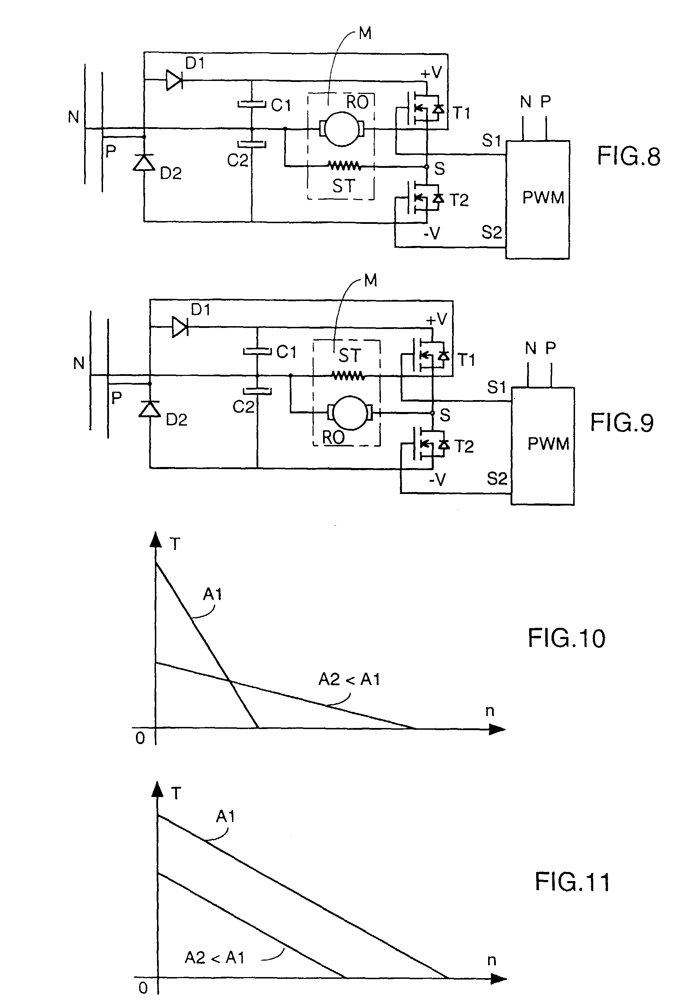

La 9 représente le même moteur que la figure 8, dans un second mode de branchement.

La figure 10 illustre la variation de la caractéristiques couple-vitesse du moteur tel que branché à la figure 8 lorsqu'on fait varier l'amplitude de la tension appliquée à l'inducteur.

La figure 11 illustre la variation de la caractéristique couple-vitesse du moteur dans son branchement selon la figure 9, lorsqu'on fait varier l'amplitude de la tension appliquée à l'induit.

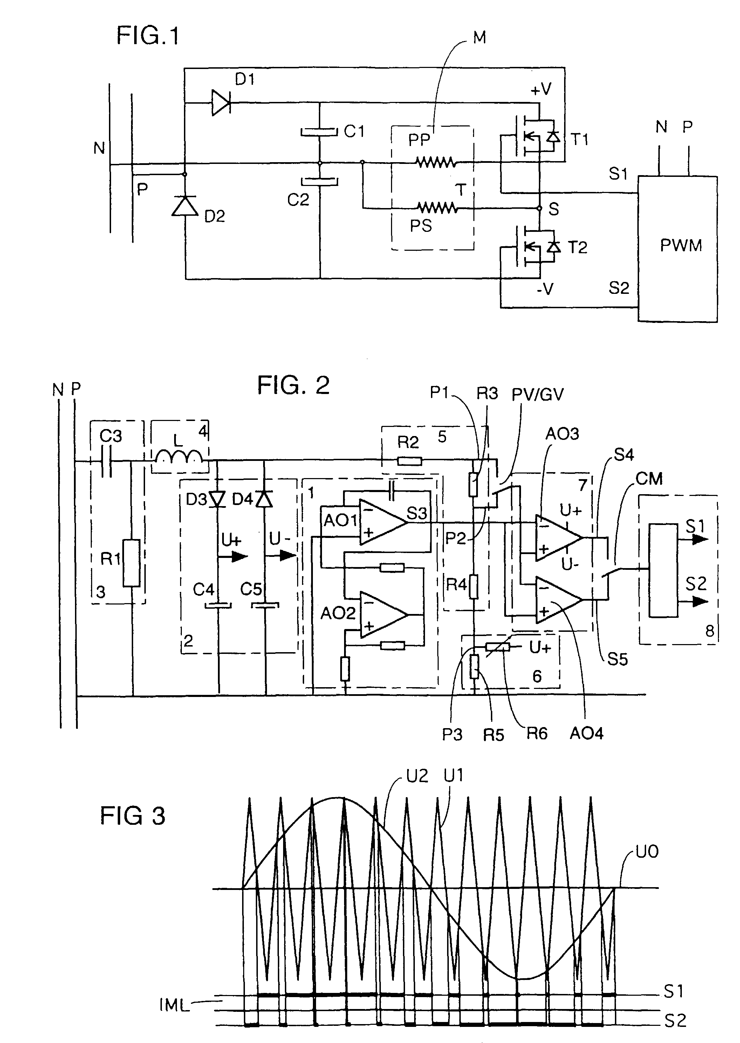

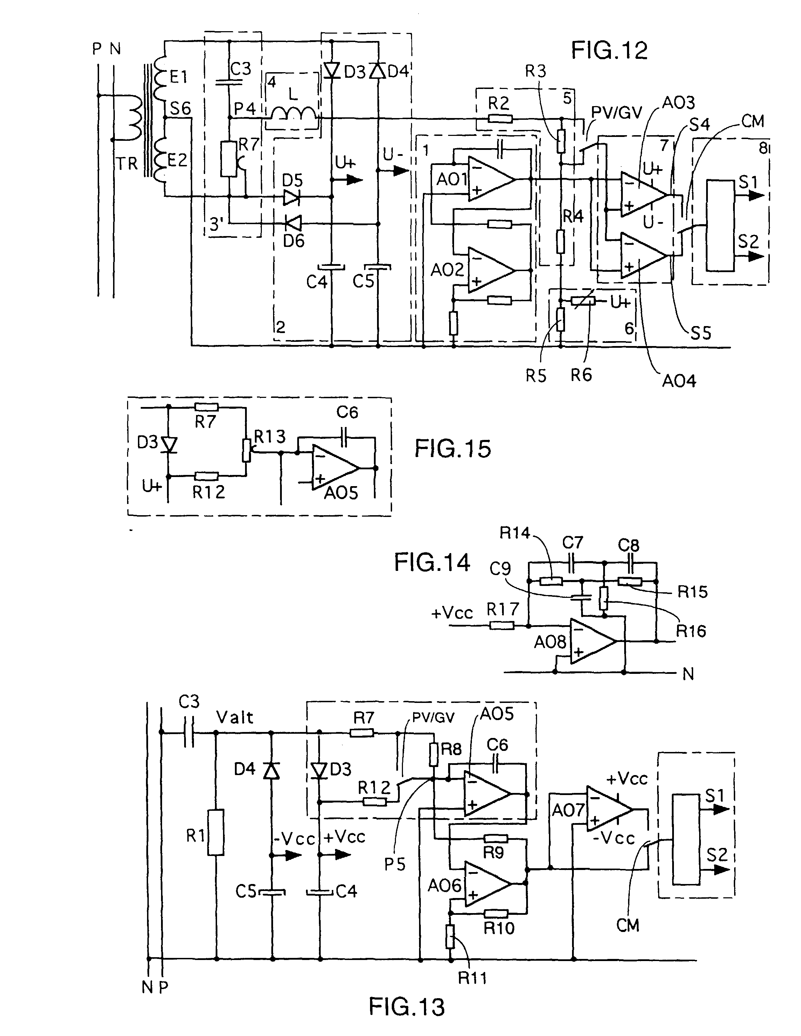

La figure 12 représente le schéma d'une variante d'exécution du générateur représenté à la figure 2, comprenant des moyens de modification du déphasage.

La figure 13 représente le schéma d'un générateur simplifié et amélioré, variante d'exécution du générateur représenté à la figure 2.

La figure 14 représente une première modification du schéma de la figure 13.

La figure 15 représente une seconde modification du schéma de la figure 13 permettant un réglage continu de la vitesse du moteur.

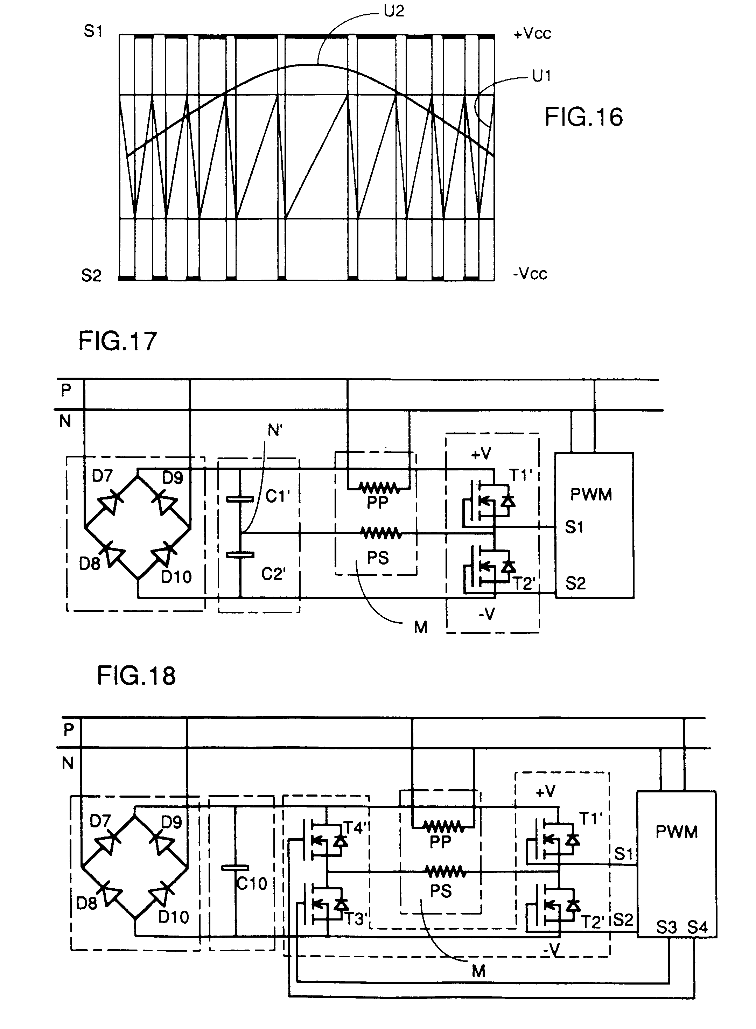

La figure 16 représente le fonctionnement du dispositif illustré à la figure 13.

La figure 17 représente un circuit d'alimentation d'un moteur monophasé à induction à phase auxiliaire alimentée à travers un pont onduleur à deux transistors.

La figure 18 représente un circuit d'alimentation d'un moteur monophasé à induction à phase auxiliaire alimentée à travers un pont onduleur à quatre transistors.

Le dispositif représenté à la figure 1 comprend un moteur monophasé à induction M équipé d'un enroulement principal PP et d'un enroulement auxiliaire PS disposés en quadrature. L'enroulement principal PP est branché entre la phase P et le neutre N du réseau d'alimentation. L'une des bornes de l'enroulement auxiliaire PS, commune à celle de l'enroulement PP est reliée au neutre N du réseau, tandis que son autre borne est reliée en un point S qui est le point milieu d'un générateur de courant auxiliaire constitué d'un circuit PWM alimenté par les mêmes bornes P et N du réseau d'alimentation, c'est-à-dire un circuit délivrant à une fréquence fixe ou variable, des impulsions modulées en largeur.

Il est rappelé ici que PWM est l'abréviation anglosaxonne utilisée généralement pour désigner la modulation par largeur d'impulsion. Le générateur PWM est associé de manière bien connue à un pont onduleur constitué de deux transistors MOS T1 et T2 fonctionnant en interrupteurs et dont le point commun S, reliant la source de T1 au drain de T2, constitue le point milieu du générateur de courant auxiliaire constitué du générateur PWM et du pont onduleur. De tels générateurs sont décrits en détail dans la publication citée plus haut "INTELLIGENT MOTION PROCEEDING" de juin 1993, pages 230 à 236, ainsi que dans les ouvrages "DESIGNERS' GUIDE TO POWER PRODUCTS" Application Manual, 2ème édition juin 1992 de SGS-THOMSON Microelectronics, pages 309 à 322, la publication "POWER SEMICONDUCTOR APPLICATIONS" de PHILIPS, pages 3-4 à 3-10 et la publication de SIEMENS "3-Phase Sine Wave Generation with the SAB 80C515A and SAB 80C17A" par Nikolaos Papadopoulos, Siemens Semiconductor Division, Rev. 2.0-e, 3/92. Un pont onduleur à transistors est notamment représenté à la page 310 de l'ouvrage SGS-THOMSON. Le drain du transistor T1 est relié à la phase P du réseau à travers une diode de blocage D1, de telle sorte que seule la demi-onde positive soit appliquée à ce drain, tandis que la source de T2 est également relié à la phase P par une diode de blocage D2 de telle sorte que seule le demi-onde négative soit appliquée à cette source. Egalement de manière classique, il est prévu deux condensateurs de filtrage C1 et C2 entre le neutre N et respectivement le drain de T1 et la source de T2, c'est-à-dire en parallèle avec chacun des transistors et l'enroulement auxiliaire PS. Les transistors T1 et T2 travaillent en interrupteurs et leur grilles sont reliées respectivement à une sortie S1 et à une sortie S2 du générateur PWM, les impulsions correspondant à une tension PS positive apparaissant sur la sortie S1 et les impulsions correspondant à une tension PS négative sur la sortie S2. Les transistors T1 et T2 sont ainsi rendus alternativement conducteurs de telle sorte que l'enroulement PS est parcouru par un courant alternatif de forme approximativement sinusoïdale.

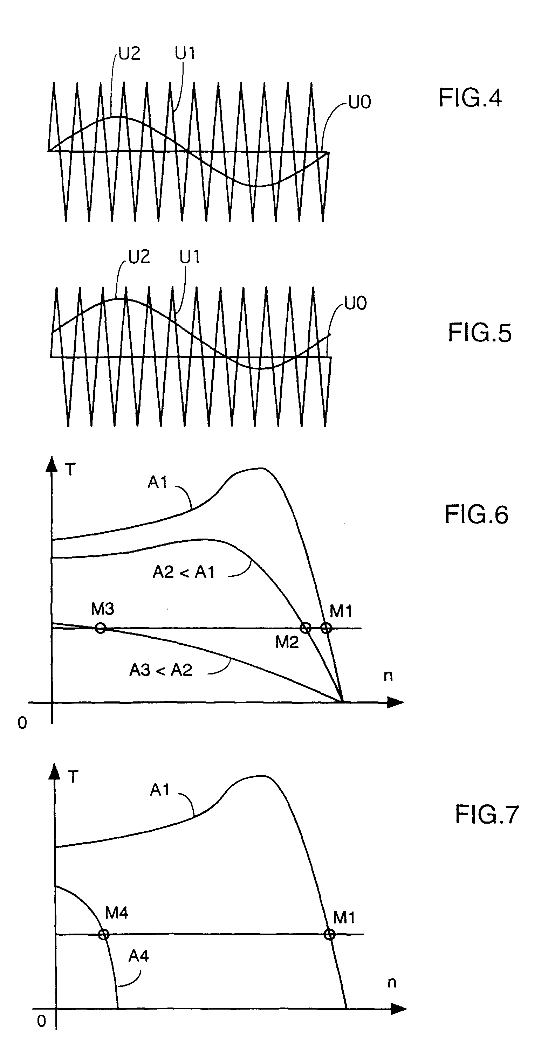

La figure 2 représente un schéma du générateur PWM tel qu'utilisé dans le circuit représenté à la figure 1. Le générateur PWM est alimenté par le réseau PN. Il comprend un oscillateur 1 délivrant une tension triangulaire ou sensiblement triangulaire, telle que représentée à la figure 3, de fréquence multiple de celle du réseau et d'amplitude constante.

Le générateur PWM comprend en outre une source de courant continu 2 alimentant les circuits, un circuit déphaseur 3 constitué d'un condensateur C3 de faible capacité et d'une résistance R1 de faible valeur, délivrant, aux bornes de la résistance R1 une tension sinusoïdale, synchrone de celle du réseau et en quadrature pratiquement exacte avec la tension du réseau, un circuit 4 constitué d'une inductance L destinée à filtrer les parasites de hautes fréquences de la tension aux bornes de R1, un circuit diviseur de tension 5, un sommateur 6 et un comparateur 7, et un circuit amplificateur 8 présentant les deux sorties complémentaires S1 et S2 commandant les transistors T1 et T2.

L'oscillateur triangulaire 1 est alimenté par la tension sinusoïdale déphasée prise aux bornes de la résistance R1 du circuit déphaseur et filtrée par l'inductance L. Il est donc synchronisé sur la tension du réseau avec un déphasage de $\pi/2$. Cette tension est appliquée à deux diodes anti-parallèles D3 et D4 branchées chacune en série avec un condensateur électrolytique C4 et C5 permettant d'obtenir une tension continue positive U$^+$ et une tension négative U- constituant une alimentation continue 2. L'oscillateur proprement dit est constitué de deux amplificateurs opérationnels AO1 et AO2, selon un schéma classique.

Le diviseur de tension 5 est constitué de quatre résistances en série R2, R3, R4, R5, la résistance R5 faisant en outre partie d'un diviseur de tension R5, R6, jouant un rôle de sommateur auquel est appliquée la tension continue positive U$^+$ et qui délivre la composante continue. Le diviseur de tension 5 permet ainsi d'obtenir deux tensions différentes aux points P1 et P2 qui sont reliés aux bornes d'un commutateur PV/GV relié d'autre part à l'entrée du comparateur 7. R6 est une résistance variable permettant de faire varier la composante continue.

La tension continue au point P3 est ainsi directement superposée à la tension sinusoïdale dans le diviseur de tension 5.

Le comparateur 7 est constitué de deux amplificateurs opérationels AO3 et AO4 reliés de façon opposée à la sortie S3 de l'oscillateur triangulaire 1 et au commutateur PV/GV, c'est-à-dire que la sortie S3 est reliée à l'entrée - de AO3 et à l'entrée + de AO4 et que le commutateur PV/GV est relié à l'entrée + de AO3 et à l'entrée - de AO4. L'ensemble des circuits AO1 à AO4 sont alimentés par les tensions U$^+$ et U- qui n'ont été représentées, pour simplifier, qu'arrivent sur AO3.

Le générateur de courant comprend enfin un amplificateur 8 présentant les sorties complémentaires S1 et S2 et susceptible de délivrer un courant d'intensité suffisante pour commander les transistors T1 et T2 (circuit "driver"). L'entrée de ce comparateur est reliée au comparateur 7 par un commutateur CM permettant de relier l'amplificateur 8 soit à l'amplificateur AO3 soit à l'amplificateur AO4.

Le commutateur PV/GV permet d'obtenir deux tensions d'alimentation différentes correspondant à une petite vitesse, dans la position représentée du commutateur, ou à une grande vitesse dans l'autre position du commutateur. En fait, le comparateur 7 est constitué de deux comparateurs AO3 et AO4. Les sorties S4 et S5 du sommateur sont donc déphasées de 180°. Le commutateur CM, qui permet de choisir l'une ou l'autre de ces sorties, permet donc d'entraîner le moteur dans un sens ou dans l'autre et constitue donc un inverseur de sens de rotation.

La comparaison de la tension triangulaire U1 délivrée par l'oscillateur 1 et de la tension sinusoïdale U2 prise sur le diviseur de tension 5 est représentée à la figure 4. Dans ce cas, la tension continue superposée est égale à 0. La figure 5 représente la même comparaison avec addition d'une composante continue prélevée en P3.

Le train d'impulsions modulées en largeur IML apparaissant aux sorties S1 et S2 est illustré à la figure 3. La largeur des impulsions détermine le temps d'ouverture des transistors T1 et T2. Le courant alternatif traversant ainsi l'enroulement auxiliaire PS présente une forme quasi sinusoïdale déphasée de $\pi/2$ relativement à la tension aux bornes de l'enroulement principal PP. Le diviseur de tension 5 pourrait également comprendre une résistance variable, par exemple R3, de manière à permettre de faire varier progressivement la tension, c'est-à-dire la vitesse du moteur.

En permettant ainsi d'agir aussi bien sur la composante continue que sur l'amplitude de la tension appliquée à la phase auxiliaire PS, le dispositif d'alimentation permet en outre d'adapter la caractéristique de couple-vitesse du moteur au régime de fonctionnement souhaité.

Il est à noter que cet effet peut être également obtenu en faisant varier le déphasage entre la tension appliquée à PS et celle appliquée à PP.

La figure 6 donne un exemple de réseau de caractéristiques couple-vitesse obtenu par la seule variation de l'amplitude de la tension appliquée à l'enroulement PS. Conventionnellement, T désigne le couple et n la vitesse du moteur. Les courbes A1, A2 et A3 représentent respectivement la caractéristique couple-vitesse pour une amplitude nominale A1 de la tension appliquée à PS et pour une tension A2 < A1 et une tension A3 < A2. On constate qu'une charge de couple résistant constant est difficilement entraînable à faible vitesse du fait du caractère presque horizontal de la caractéristique de couple moteur dans cette zone de base vitesse (point M3), alors que le dispositif convient parfaitement pour un réglage de vitesse dans la zone des fortes vitesses (point M2).

La figure 7 représente un exemple de caractéristiques obtenues avec le même moteur, mais par l'action combinée sur l'amplitude de la tension et sur la composante continue. La courbe A1 représente la caractéristique couple-vitesse obtenue pour une tension d'amplitude nominale et une composante continue égale à 0, tandis que la courbe A4 représente la caractéristique obtenue pour une amplitude de tension A4 < A1 et une composante continue > 0. On retrouve une caractéristique de couple-vitesse fortement inclinée qui donne un régime de fonctionnement stable (point M4).

Les figures 8 à 10 illustrent l'application de l'invention à l'alimentation d'un moteur alternatif à collecteur à inducteur ST et induit RO bobinés. De tels moteurs, introduits primitivement comme moteur à courant continu, sont utilisables en courant alternatif à la condition que les courants circulant dans les enroulements soient sensiblement en phase. Cette condition est automatiquement réalisée dans les moteurs de type série, appelé aussi moteur universel, dans lesquels le bobinage inducteur est en série avec le bobinage d'induit. La bonne conception d'un tel moteur requiert un décalage important des balais par rapport à la ligne neutre pour résoudre au mieux les problèmes de commutation. Le décalage optimal est fonction du régime du fonctionnement du moteur. En pratique, le moteur universel est utilisé pour de faibles puissances et un décalage fixe des balais est adopté, choix résultant d'un compromis sur un régime moyen. L'inversion du sens de marche nécessite un inverseur bi-polaire. En outre, un décalage des balais n'est valable que pour un seul sens de marche du moteur. Si le moteur doit tourner dans les deux sens, il est nécessaire soit de positionner les balais sur la ligne neutre, avec pour conséquence une usure car les commutations sont mauvaises, soit d'avoir deux jeux de balais, ce qui complique la construction du moteur.

Le mode d'alimentation selon l'invention est applicable à un moteur de type à excitation parallèle, à stator feuilleté, selon les deux configurations représentées aux figures 8 et 9.

Le circuit est analogue à celui de la figure 1. Dans le mode représenté à la figure 8, l'induit RO est alimenté par le réseau, tandis que l'inducteur ST est alimenté au moyen du générateur PWM.

Dans le mode d'alimentation selon la figure 9, c'est l'inducteur ST qui est alimenté par le réseau et l'induit RO qui est alimenté par le générateur PWM.

Dans le générateur de la figure 2 le bloc 3 peut être supprimé car les tensions appliquées à l'inducteur et à l'induit sont en principe en phase. Il est cependant possible de prévoir, dans le générateur PWM, des moyens de déphasage des tensions permettant, si désiré, d'introduire un déphasage équivalent à celui obtenu par un décalage des balais, le décalage physique des balais étant ainsi remplacé par un décalage électronique. De tels moyens de déphasage sont représentés à la figure 12. La tension d'alimentation du générateur est prise ici sur le secondaire E1, E2 d'un transformateur TR dont le primaire est connecté au réseau P, N. Le secondaire présente un point milieu S6 qui détermine le niveau zéro. Entre les bornes du secondaire E1, E2 sont branchés, en série, le condensateur C3 et une résistance variable R7, à curseur, qui constituent un circuit déphaseur 3'. La borne de la résistance variable R7 reliée au transformateur et son curseur sont reliés à la borne commune de la diode D3 et du condensateur C4 à travers une diode de blocage D5 et à la borne commune de la diode D4 et du condensateur C5. Le schéma diffère en outre de celui de la figure 2 en ce que les diodes de blocage D3 et D4 sont reliées au point commun du condensateur C3 et du transformateur TR, au lieu d'être reliées à la self L. Pour le reste le schéma représenté à la figure 12 est identique à celui de la figure 2. En agissant sur la résistance variable R7 on fait varier le déphasage de la tension sinusoïdale en P4 relativement à la tension du réseau. Selon la position du curseur de la résistance variable R7 la tension peut être déphasée dans un sens ou dans l'autre. Un déphasage de 180° permet d'obtenir l'inversion du sens de rotation du moteur. Il serait donc possible de simplifier le bloc 6 et de supprimer l'inverseur CM.

Ce montage à déphasage variable peut donc être également utilisé pour modifier la vitesse d'un moteur asynchrone monophasé.

Les possibilités de modification de la caractéristique couple-vitesse du moteur pour une configuration selon la figure 8, sont représentées à la figure 10. A1 représente l'allure de la caractéristique couple-vitesse pour une tension nominale appliquée à l'inducteur, tandis que A2 représente l'allure de la caractéristique couple-vitesse pour une amplitude de cette tension inférieure à l'amplitude nominale.

Les possibilités de modification des caractéristiques couple-vitesse du moteur dans la configuration représentée à la figure 9 sont illustrées à la figure 11 où A1 et A2 ont la même signification que dans la figure 10.

Un mode d'exécution du générateur de courant alternatif particulièrement adapté à la présente application est représenté à la figure 13.

Ce générateur comprend, comme le générateur représenté à la figure 2, un circuit déphaseur constitué d'un condensateur C3 et d'une résistance R1 permettant d'obtenir une tension Valt, d'amplitude Vcc, déphasée de 90° relativement à la tension du réseau NP et un circuit redresseur constitué de deux diodes D3, D4 anti-parallèles, en série respectivement avec un condensateur électrolytique C4, C5. Les composants du circuit sont supposés idéaux. Aux bornes des condensateurs C4 et C5 on peut ainsi prélever deux tensions continues opposées +Vcc et -Vcc. La tension sinusoïdale déphasée Valt est appliquée à un diviseur de tension constitué des résistances R7, R8, R9, R10 et R11. Un commutateur PV/GV permet de court-circuiter à volonté la résistance R8 de manière à obtenir deux tensions différentes au point P5 ces deux tensions correspondant à l'alimentation du moteur à petite vitesse (position représentée du commutateur) ou à grande vitesse (dans l'autre position du commutateur).

L'oscillateur triangulaire est essentiellement constitué d'un premier amplificateur opérationnel AO5 qui, dans ce mode d'exécution, délivre un signal triangulaire présentant une pente différente dans sa partie croissante et dans sa partie décroissante en raison d'un montage en intégrateur à entrées multiples. Autrement dit, la pente de la tension de sortie est, à tout instant, une combinaison linéaire des trois entrées qui sont : la tension de sortie d'un second amplificateur opérationnel AO6 monté en comparateur à hystérèse réglée par le choix des résistances R10 et R11, la tension continue +Vcc prise à travers une résistance R12 et la tension sinusoïdale d'amplitude Vcc divisée par le diviseur de tension. Les composants du circuit étant supposés idéaux, la tension de sortie de l'amplificateur opérationnel AO6 vaut +Vcc ou -Vcc selon la valeur de la tension appliquée à l'entrée, qui se trouve être la tension triangulaire issue de l'amplificateur opérationnel AO5.

Le poids de chacune des tensions appliquées aux entrées de l'amplificateur opérationnel AO5 dans la pente du signal de sortie de AO5 est inversement proportionnel à la résistance correspondante, laquelle est ici choisie selon les cas égale à R ou 2R, la valeur des résistances R7, R8 et R9 étant égale à R et celle de la résistance R12 à 2R.

Le signal issu de l'amplificateur opérationnel AO6 est donc un signal rectangulaire égal à +Vcc lorsque la pente du signal triangulaire est décroissante et égal -Vcc lorsque la pente du signal triangulaire U1 est croissante, donc avec un rapport cyclique variable en fonction du poids affecté aux composantes sinusoïdales et continue d'entrée et de la valeur instantanée de la composante sinusoïdale. On a donc à la sortie de AO6 le signal rectangulaire modulé en largeur désiré. Ce signal est appliqué, d'une part, à l'entrée inverseuse d'un troisième amplificateur opérationnel AO7 monté en comparateur et délivrant à sa sortie un signal identique à celui pris à la sortie de AO6 mais déphasé de 180° (figure 16) et, d'autre part, à l'une des bornes du commutateur CM qui permet de relier le comparateur 7 soit à la sortie de l'amplificateur opérationnel AO6 soit à la sortie de l'amplificateur opérationnel AO7 pour l'inversion du sens de rotation du moteur, comme dans les cas précédents.

Par rapport aux générateurs de signaux rectangulaires modulés en largeur d'impulsion connus, ce générateur réalisé par intégrateur-sommateur, présente, pour l'application particulière, les avantages suivants : un nombre réduit de composants, un réglage individuel et propre des poids relatifs à l'amplitude et à la composante continue, une indépendance par rapport à la tension secteur et un filtrage intrinsèque, par l'intégrateur, des parasites de hautes fréquences provenant du secteur et recueillis sur la sinusoïde d'entrée.

Si l'on désire avoir un réglage continu de la vitesse avec un seul potentiomètre, il est possible de modifier le circuit comme représenté à la figure 15. Le commutateur PV/GV est remplacé par un potentiomètre R13 reliant les résistances R7 et R12 et dont le curseur est relié à l'entrée inverseuse de l'amplificateur opérationnel AO5.

Si l'on tient compte de la disponibilité d'un quatrième amplificateur opérationnel dans les boîtiers intégrés standards, il est possible d'inclure un filtrage actif supplémentaire visant à l'obtention d'une sinusoïde la plus parfaite possible. Une telle modification est représentée à la figure 14. Ce circuit est introduit entre le pont redresseur et le diviseur de tension. Il est constitué d'un quatrième amplificateur opérationnel AO8 opérant en amplificateur sélectif et dont l'entrée inverseuse est reliée au déphaseur C3, R1 par une résistance R17. La sortie est reliée à l'entrée inverseuse de l'amplificateur opérationnel par une boucle réactive constituée de deux condensateurs C7, C8 en série l'un avec l'autre et en parallèle avec deux résistances R14, R15, le point commun de C7 et C8 étant relié au neutre N du secteur par une résistance R16 et le point commun des résistances R14 et R15 étant relié à N par un condensateur C9.

C7 et C8 ont la même valeur qui est la moitié de celle de C9. R14 et R15 ont la même valeur qui est le double de celle de R16. Si on appelle R la valeur de R14 et R15 et C la valeur de C7 et C8, la fréquence de coupure fc du filtre actif passe-bas constitué par le circuit représenté est :

$$fc = 1/(2\pi RC).$$

Pour une fréquence de secteur de 50 Hz, les valeurs de R et C sont choisies de telle sorte que fc = 50 Hz. La tension à la sortie de AO8 est donc, dans le cas idéal, une parfaite sinusoïde de fréquence égale à 50 Hz.

Le mode d'alimentation selon les figures 1, 8 ou 9 se révèle coûteux du fait que les transistors et leurs circuits de commande doivent être dimensionnés pour une tension continue égale à deux fois l'amplitude de la tension alternative du secteur d'alimentation. Il est cependant possible de réduire de façon significative le coût du dispositif en utilisant un pont de Graetz fournissant une tension redressée à deux alternances de la tension de la source, cette tension redressée étant appliquée au pont onduleur.

Le dispositif représenté à la figure 17 comprend un moteur monophasé à induction M équipé d'un enroulement principal PP et d'un enroulement auxiliaire PS disposés en quadrature. L'enroulement principal PP est branché directement entre la phase P et le neutre N du réseau d'alimentation. Les enroulements PS et PP n'ont donc plus de borne commune. La phase P et le neutre N sont en outre reliés à l'une des diagonales d'un redresseur en pont de Graetz constituée des quatre diodes D7, D8, D9, D10. Entre les deux bornes de l'autre diagonale de ce pont de Graetz sont branchés en série deux condensateurs de filtrage C1' et C2'. L'une des bornes de l'enroulement auxiliaire PS est reliée au point commun N' des condensateurs C1' et C2' tandis que l'autre borne de l'enroulement auxiliaire PS est reliée en un point S qui est le point milieu d'un générateur de courant auxiliaire constitué d'un circuit PWM alimenté par le réseau P, N, synchronisé avec le réseau et agencé de telle sorte que la fréquence du courant qu'il produit est égale à la fréquence du réseau. Ce générateur PWM est associé, comme dans les modes d'exécutions précédents, à un pont onduleur constitué de deux transistors MOS T1' et T2' fonctionnant en interrupteur et dont le point commun S, reliant la source de Tl' au drain de T2' constitue le point milieu du générateur de courant auxiliaire constitué du générateur PWM et du pont onduleur.

Le drain du transistor T1' est relié à l'une des bornes de sortie du pont de Graetz, tandis que la source du transistor T2' est reliée à l'autre borne de sortie de ce pont. Les transistors T1' et T2' travaillent en interrupteurs et leurs grilles sont reliées respectivement à une sortie S1 et à une sortie S2 du générateur PWM, les impulsions correspondant à une tension PS positive apparaissant sur la sortie S1 et les impulsions correspondant à une tension PS négative sur la sortie S2. Les transistors T1' et T2' sont ainsi rendus alternativement conducteurs de telle sorte que l'enroulement auxiliaire PS est parcouru par un courant alternatif de forme approximativement sinusoïdale comme décrit plus haut.

Le point N' joue donc le rôle d'un neutre artificiel, de telle sorte que la tension maximale appliquée aux transistors T1' et T2' est égale au maximum de tension du réseau, et non au double comme précédemment. Les condensateurs de filtrage, voient également leur tension de service divisée par deux. Dans la mesure où c'est la tension maximum et non le courant qui renchérit le coût des composants, la modification apportée aux dispositifs précédents permet de réduire environ de moitié le coût de ces composants et de réduire ainsi de façon significative le coût de l'ensemble du dispositif.

Le dispositif d'alimentation représenté à la figure 18 diffère du dispositif précédent en ce que le pont onduleur comprend deux transistors supplémentaires T3', T4' identiques aux transistors T1', T2'. Les transistors T1', T2', T3', T4' sont montés en carré, comme dans un pont de Graetz et la tension redressée, filtrée par un seul condensateur C10, est appliquée aux extrémités de l'une des diagonales du pont tandis que l'enroulement auxiliaire PS constitue l'autre diagonale du pont. Les grilles des transistors T3' et T4' sont reliées à deux sorties supplémentaires S3, S4 du générateur PWM de telle sorte que T3' conduit avec T1' et que T4' conduit avec T2', ceci alternativement et selon un rapport cyclique variable. La variation du rapport cyclique permet de faire varier les composantes alternative et continue. L'utilisation d'un pont onduleur à quatre transistors permet de générer la composante continue de manière plus performante.

Les modes d'alimentation décrits ci-dessus sont bien entendu également applicables aux moteurs à courant alternatif à collecteur, avec induit et inducteur bobinés. L'enroulement relié au générateur de courant peut être soit le bobinage de l'inducteur, soit le bobinage de l'induit, l'autre bobinage étant relié directement et exclusivement au secteur P, N.

## Revendications

1. Dispositif d'alimentation pour moteur électrique à courant alternatif monophasé à deux enroulements, comprenant un générateur de courant travaillant par modulation de largeur d'impulsion (PWM, T1, T2; PWM, T1', T2'; PWM, T1', T2', T3', T4') de manière à engendrer dans le moteur un courant alternatif de forme quasi sinusoïdale, caractérisé en ce que ledit générateur de courant alternatif est relié à un seul (PS; ST; RO) des enroulements du moteur, que l'autre enroulement (PP; RO; ST) est relié exclusivement et directement à une source de courant alternatif monophasé (P, N), et que ledit générateur est agencé pour que la fréquence fondamentale du courant issu du générateur soit égale à la fréquence de la source de courant alternatif.

2. Dispositif d'alimentation selon la revendication 1, pour l'alimentation d'un moteur asynchrone à induction dont le stator porte un enroulement principal (PP) et un enroulement auxiliaire (PS), caractérisé en ce que l'enroulement principal est relié à la source de courant alternatif, en particulier le réseau, et que l'enroulement auxiliaire (PS) est relié directement, sans condensateur de déphasage, au générateur de courant alternatif et alimenté par ce dernier sensiblement en quadrature par rapport à l'enroulement principal.

3. Dispositif d'alimentation selon la revendication 2, caractérisé en ce que le générateur de courant alternatif (PWM) est synchronisé avec le réseau (P, N) et délivre à l'enroulement auxiliaire (PS) une tension déphasée de $\pi/2$ relativement à la tension du réseau.

4. Dispositif d'alimentation selon la revendication 2, caractérisé en ce que le générateur de courant alternatif comprend un oscillateur triangulaire.

5. Dispositif d'alimentation selon la revendication 1, pour l'alimentation d'un moteur à courant alternatif à collecteur de type à excitation parallèle ou indépendante, comprenant un induit (RO) et un inducteur (ST), caractérisé en en ce que l'enroulement relié au générateur de courant est le bobinage de l'inducteur (ST).

6. Dispositif d'alimentation selon la revendication 1, pour l'alimentation d'un moteur à courant alternatif à collecteur à excitation parallèle ou indépendante, comprenant un induit (RO) et un inducteur (ST), caractérisé en en ce que l'enroulement relié au générateur de courant est le bobinage de l'induit (RO).

7. Dispositif d'alimentation selon l'une des revendications 1 à 6, caractérisé en ce que le générateur de courant alternatif (PWM) comprend des moyens pour faire varier l'amplitude de la tension de sortie constitués d'un diviseur de tension à plusieurs points (R2, R3, R4, R5) ou d'un diviseur de tension comprenant une résistance variable.

8. Dispositif d'alimentation selon l'une des revendications 1 à 7, caractérisé en ce que le générateur de courant alternatif (PWM) comprend des moyens (R5, R6) pour ajouter une composante de tension continue à la tension alternative.

9. Dispositif d'alimentation selon l'une des revendications 1 à 8, caractérisé en ce que le générateur de courant alternatif (PWM) est branché sur le réseau (NP) et qu'il est constitué d'un circuit déphaseur (C3, R1) introduisant un déphasage de $\pi/2$ relativement à la tension du réseau, d'un oscillateur triangulaire (AO1, AO2), d'un diviseur de tension (R2, R3, R4, R5) auquel est appliquée la tension déphasée, de deux comparateurs (AO3, AO4) auxquels sont appliquées, de manière opposée sur chacun des sommateurs, la tension triangulaire délivrée par l'oscillateur et la tension sinusoïdale prélevée sur le diviseur de tension, et délivrant des impulsions modulées en largeur déphasées de 180° entre les deux sorties (S4, S5) et d'un comparateur présentant deux sorties complémentaires (S1, S2) sur lesquelles apparaît la tension rectangulaire modulée en largeur d'impulsion, et d'un pont onduleur (T1, T2) auquel sont appliquées lesdites sorties (S1, S2).

10. Dispositif d'alimentation selon l'une des revendications 1 à 8, en particulier pour moteur à collecteur, caractérisé en ce que le générateur de courant alternatif (PWM) est relié au réseau par l'intermédiaire d'un transformateur (TR) dont le secondaire (E1, E2) présente un point milieu (S6) déterminant un niveau zéro de symétrie et entre les bornes duquel sont branchés, en série, un condensateur (C3) et une résistance variable (R7), dont la borne commune fournit une tension dont le déphasage relativement à la tension du réseau varie avec la résistance variable (R7), cette tension étant appliquée à un sommateur (6) auquel est en outre appliquée la tension d'un oscillateur triangulaire (AO1, AO2), le tout de manière à permettre de faire varier électroniquement le déphasage entre le courant d'induit et le courant d'inducteur.

11. Dispositif d'alimentation selon l'une des revendications 1 à 8, caractérisé en ce que le générateur de courant alternatif (PWM) est branché sur le réseau (NP) et qu'il comprend un circuit déphaseur (C3, R1) introduisant un déphasage de $\pi/2$ relativement à la tension du réseau, un diviseur de tension (R7 à R11), auquel est appliquée la tension déphasée (Vcc), un circuit redresseur (D3, C4, D4, C5) délivrant deux tensions continues de signes opposés (+Vcc, -Vcc), un oscillateur triangulaire constitué d'un premier amplificateur opérationnel (AO5) monté en intégrateur à entrées multiples et délivrant un signal triangulaire, un deuxième amplificateur opérationnel (AO6) monté en comparateur à hystérèse à l'entrée duquel est appliquée la tension triangulaire du premier amplificateur opérationnel (AO5), les tensions appliquées aux entrées du premier amplificateur opérationnel (AO5) étant la tension de sortie du deuxième amplificateur opérationnel (AO6), la tension continue positive (+Vcc) et la tension sinusoïdale déphasée (Vcc), un troisième amplificateur opérationnel (AO7) monté en comparateur inverseur, à l'entrée inverseuse duquel est appliqué le signal rectangulaire modulé en largeur pour son déphasage de 180°, un amplificateur (7) présentant deux sorties (S1, S2), sur lesquelles apparaît la tension rectangulaire modulée, un commutateur (CM) permettant de relier le comparateur (R7) soit directement à la sortie du deuxième amplificateur opérationnel (AO6), soit à la sortie du troisième amplificateur opérationnel (AO7) et un pont onduleur (T1, T2) auquel sont appliquées les sorties (S1, S2) du comparateur.

12. Dispositif d'alimentation selon la revendication 11, caractérisé en ce qu'entre le circuit déphaseur (C3, D1) et le diviseur de tension (R7, R11) est disposé un circuit de filtrage actif comprenant un quatrième amplificateur opérationnel (AO8) et constituant un amplificateur sélectif présentant une fréquence de coupure égale à la fréquence de la tension du secteur.

13. Dispositif d'allimentation selon l'une des revendications 1 à 12, caractérisé en ce que les deux enroulements (PP, PS) ont une borne commune reliée à la source de courant alternatif monophasé (P, N).

14. Dispositif d'alimentation selon l'une des revendications 1 à 12, caractérisé en ce qu'il comprend un pont de Graetz (D7 à D10) fournissant une tension redressée à deux alternances de la tension de la source (P, N) et auquel est associé au moins un condensateur de filtrage (C1', C2'; C10) et en ce que la tension redressée est appliquée au pont onduleur (T1', T2'; T1', T2', T3', T4') du générateur de courant (PWM, T1', T2'; PWM, T1', T2', T3', T4').

**15.** Dispositif d'alimentation selon la revendication 14, caractérisé en ce que le pont de Graetz est associé à deux condensateurs de filtrage (C1', C2'), que le pont onduleur est constitué d'une paire de transistors (T1', T2') et que l'une des bornes de l'enroulement (PS) relié à la source de courant alternatif est reliée au point commun des transistors et l'autre borne au point commun (N') des condensateurs (C1', C2').

**16.** Dispositif d'alimentation selon la revendication 14, caractérisé en ce que le pont de Graetz est associé à un seul condensateur de filtrage (C10), que le pont onduleur comprend deux paires de transistors (T1', T2', T3', T4') montés en "carré" à l'une des "diagonales" duquel est appliquée la tension redressée et que l'enroulement (PS) relié à la source de courant alternatif constitue l'autre "diagonale" du pont onduleur.

**Patentansprüche**

**1.** Stromversorgungsvorrichtung für einen einphasigen Wechselstrommotor mit zwei Wicklungen, mit einem Stromgenerator, der mit Impulsbreitenmodulation (PWM, T1, T2, ; PWM, T1', T2'; PWM, T1', T2', T3', T4') arbeitet, derart, dass im Motor ein quasi-sinusförmiger Wechselstrom erzeugt wird, dadurch gekennzeichnet, dass der erwähnte Wechselstromgenerator an nur eine (PS ; ST ; RO) der Wicklungen des Motors angeschlossen ist, dass die andere Wicklung (PP ; RO ; ST) ausschliesslich und direkt an eine einphasige Wechselstromquelle angeschlossen ist und dass der erwähnte Generator so eingerichtet ist, dass die vom Generator abgegebene Grundfrequenz gleich der Frequenz der Wechselstromquelle ist.

**2.** Speisevorrichtung nach Anspruch 1 zur Speisung eines Asynchronmotors, dessen Stator eine Hauptwicklung (PP) und eine Hilfswicklung (PS) trägt, dadurch gekennzeichnet, dass die Hauptwicklung an die Wechselstromquelle, insbesondere das Netz, angeschlossen ist, und dass die Hilfswicklung (PS) direkt, ohne Phasenschieberkondensator, an den Wechselstromgenerator angeschlossen ist und von diesem im wesentlichen um 90° in Bezug auf die Hauptwicklung phasenverschoben gespeist wird.

**3.** Speisevorrichtung nach Anspruch 2, dadurch gekennzeichnet, dass der Wechselstromgenerator (PWM) mit dem Netz (P, N) synchronisiert ist und eine um $\pi/2$ relativ zur Netzspannung phasenverschobene Spannung an die Hilfswicklung (PS) liefert.

**4.** Speisevorrichtung nach Anspruch 2, dadurch gekennzeichnet, dass der Wechselstromgenerator einen trigonalen Oszillator aufweist.

**5.** Speisevorrichtung nach Anspruch 1 zur Speisung eines Wechselstrom-Kollektormotors mit Parallel- oder unabhängiger Anregung, welcher einen Anker (RO) und einen Feldmagneten (ST) aufweist, dadurch gekennzeichnet, dass die an den Stromgenerator angeschlossene Wicklung die Feldwicklung ist.

**6.** Speisevorrichtung nach Anspruch 1 zur Speisung eines Wechselstrom-Kollektormotors mit Parallel- oder unabhängiger Anregung, welcher einen Anker (RO) und einen Feldmagneten (ST) aufweist, dadurch gekennzeichnet, dass die an den Stromgenerator angeschlossene Wicklung die Ankerwicklung (RO) ist.

**7.** Speisevorrichtung nach einem der Ansprüche 1 bis 6, dadurch gekennzeichnet, dass der Wechselstromgenerator (PWM) Mittel zum Variieren der Amplitude der Ausgangsspannung aufweist, welche aus einem Mehrpunkt-Spannungsteiler (R2, R3, R4, R5) oder aus einem Spannungsteiler mit veränderbaren Widerstand bestehen.

**8.** Speisevorrichtung nach einem der Ansprüche 1 bis 7, dadurch gekennzeichnet, dass der Wechselstromgenerator (PWM) Mittel (R5, R6) aufweist, um der Wechselspannung eine Gleichstromkomponente zuzufügen.

**9.** Speisevorrichtung nach einem der Ansprüche 1 bis 8, dadurch gekennzeichnet, dass der Wechselstromgenerator (PWM) an das Netz (NP) angeschlossen ist und dass er folgende Komponenten aufweist : Eine Phasenschieberschaltung (C3, R1), die eine Phasenverschiebung von $\pi/2$ relativ zur Netzspannung einführt, einen trigonalen Oszillator (AO1, AO2), einen Spannungsteiler (R2, R3, R4, R5), an dem die phasenverschobene Spannung liegt, zwei Komparatoren (AO3, AO4), an denen, entgegengesetzt an jedem der Summatoren, die durch den Oszillator gelieferte trigonale Spannung und die am Spannungsteiler abgegriffene sinusförmige Spannung angelegt sind, wobei breitenmodulierte Impulse geliefert werden, die um 180° zwischen den beiden Ausgängen (S4, S5) phasenverschoben sind, einen Komparator, der zwei komplementäre Ausgänge (S1, S2) aufweist, an denen die impulsbreiten-modulierte rechteckförmige Spannung auftritt, und eine Wechselrichterbrücke (T1, T2), an welcher die erwähnten Ausgänge (S1, S2) liegen.

**10.** Speisevorrichtung nach einem der Ansprüche 1 bis 8, insbesondere für einen Kollektormotor, dadurch gekennzeichnet, dass der Wechselstromgenerator (PWM) mittels eines Transformators an das Netz angeschlossen ist, welcher eine Sekundärwicklung mit einer das Symmetrie-Nullniveau bestimmenden Mittelanzapfung aufweist, dass zwischen den Klemmen der Sekundärwicklung ein Kondensator (C3) und ein Regelwiderstand (R7) in Reihe geschaltet sind, deren gemeinsame Klemme eine Spannung liefert, deren Phasenverschiebung relativ zur Netzspannung mit dem Regelwiderstand (R7) variiert, und welche an einem Summator (6) liegt, an dem ausserdem die Spannung eines trigonalen Oszillators (AO1, AO2) angelegt ist, was es erlaubt, die Phasenverschiebung zwischen dem Ankerstrom und dem Strom der Feldspule elektronisch zu variieren.

11. Speisevorrichtung nach einem der Ansprüche 1 bis 8, dadurch gekennzeichnet, dass der Wechselstromgenerator (PWM) an das Netz (NP) angeschlossen ist und dass er folgende Komponenten aufweist: Eine Phaseschieberschaltung (C3,, R1), die eine Phasenverschiebung von $\pi/2$ relativ zur Netzspannung einführt, einen Spannungsteiler (R7 bis R11), an dem die phasenverschobene Spannung (Vcc) liegt, eine Gleichrichterschaltung (D3, C4, D4, C5), die zwei Gleichspannungen mit entgegengesetzten Vorzeichen (+Vcc, -Vcc) liefert, einen trigonalen Oszillator, der aus einem ersten, als Integrator mit mehreren Eingängen geschaltetem Operationsverstärker (AO5) besteht, der ein trigonales Signal liefert, einen zweiten Operationsverstärker (AO6), der als Komparator mit Hysterese geschaltet ist, an dessen Eingang die trigonale Spannung des ersten Operationsverstärkers (AO5) angelegt ist, wobei die an den Eingängen des ersten Operationsverstärkers (AO5) liegenden Spannungen die Ausgangsspannung des zweiten Operationsverstärkers (AO6), die positive Gleichspannung (+Vcc) und die phasenverschobene sinusförmige Spannung (Vcc) sind, einen dritten, als inversen Komparator geschalteten Operationsverstärker (AO7), an dessen inversem Eingang das breitenmodulierte rechteckförmige Signal zwecks Phasenverschiebung desselben um 180° liegt, einen Verstärker (7) mit zwei Ausgängen (S1, S2), an denen die modulierte rechteckförmige Spannung liegt, einen Schalter (CM), der den Komparator (R7) entweder direkt mit dem Ausgang des zweiten Operationsverstärkers (AO6) oder mit dem Ausgang des dritten Operationsverstärkers (AO7) zu verbinden erlaubt, und eine Wechselrichterbrücke (T1, T2), an welcher die Ausgänge (S1, S2) des Komparators liegen.

12. Speisevorrichtung nach Anspruch 11, dadurch gekennzeichnet, dass zwischen der Phasenschieberschaltung (C3,D1) und dem Spannungsteiler (R7, R11) eine aktive Filterschaltung angeordnet ist, die einen vierten Operationsverstärker (AO8) aufweist und einen selektiven Verstärker bildet, der eine Grenzfrequenz hat, die gleich der Frequenz der Netzspannung ist.

13. Speisevorrichtung nach einem der Ansprüche 1 bis 12, dadurch gekennzeichnet, dass die beiden Wicklungen (PP, PS) eine gemeinsame Klemme haben, die an die einphasige Wechselstromquelle (P, N) angeschlossen ist.

14. Speisevorrichtung nach einem der Ansprüche 1 bis 12, dadurch gekennzeichnet, dass er eine Graetz-Brücke (D7 bis D10) aufweist, die eine durch Zweiweggleichrichtung der Spannung der Quelle (P, N) gebildete gleichgerichtete Spannung liefert und welche mit wenigstens einem Filterkondensator (C1', C2', C10) verbunden ist, und dass die gleichgerichtete Spannung an der Wechselrichterbrücke (T1', T2' ; T1', T2', T3', T4') des Stromgenerators (PWM), T1', T2' ; PWM, T1', T2', T3', T4') liegt.

15. Speisevorrichtung nach Anspruch 14, dadurch gekennzeichnet, dass die Graetz-Brücke mit zwei Filterkondensatoren (C1', C2') verbunden ist, dass die Wechselrichterbrücke aus einem Paar Transistoren (T1', T2') besteht und dass eine der Klemmen der Wicklung (PS), die an die Wechselstromquelle angeschlossen ist, mit dem gemeinsamen Punkt der Transistoren und die andere Klemme mit dem gemeinsamen Punkt (N') der Kondensatoren (C1', C2') verbunden ist.

16. Speisevorrichtung nach Anspruch 14, dadurch gekennzeichnet, dass die Graetz-Brücke mit einem einzigen Filterkondensator (C10) verbunden ist, dass die Wechselrichterbrücke zwei Paare Transistoren (T1', T2', T3', T4') aufweist, die " im Quadrat" geschaltet sind, an dessen einer " Diagonalen" die gleichgerichtete Spannung liegt, und dass die an die Wechselstromquelle angeschlossene Wicklung (PS) die andere "Diagonale" der Wechselrichterbrücke bildet.

## Claims

1. A power supply device for a two-winding single-phase AC electric motor, comprising a current generator working by pulse-width modulation (PWM, T1, T2; PWM, T1', T2'; PWM, T1', T2', T3', T4') so as to generate an AC current of quasi-sinusoidal shape in the motor, wherein said AC generator is connected to only one (PS; ST; RO) of the windings of the motor, characterized in that the other winding (PP; RO; ST) is connected exclusively and directly to a single-phase AC source (L, N) and in that said generator is arranged so that the fundamental frequency of the current coming from the generator is equal to the frequency of the AC source.

2. The power supply device as claimed in claim 1, for the supply of an asynchronous induction motor, the stator of which carries a main winding (PP) and an auxiliary winding (PS), characterized in that the main winding is connected to the AC source, in particular the mains, and in that the auxiliary winding (PS) is connected directly, without a phase-shifting capacitor, to the AC generator and supplied by the latter substantially in quadrature in respect to the main winding.

3. The power supply device as claimed in claim 2, characterized in that the AC current generator (PWM) is synchronized with the mains (L, N) and delivers a tension, phase- shifted by $\pi/2$ relative to the mains tension to the auxiliary winding (PS).

4. The power supply device as claimed in claim 2, characterized in that the AC current generator comprises a triangular- waveform oscillator.

5. The power supply device as claimed in claim 1, for the supply of a commutator AC motor of the type having parallel or independent excitation, comprising an armature (RO) and a field winding (ST), characterized in that the winding connected to the current generator is the winding of the field winding (ST).

6. The power supply device as claimed in claim 1, for the supply of a commutator AC motor having parallel or independent excitation, comprising an armature (RO) and a field winding (ST), characterized in that the winding connected to the current generator is the winding of the armature (RO).

7. The power supply device as claimed in one of claims 1 to 6, characterized in that the AC current generator (PWM) comprises means for varying the amplitude of the output voltage, these consisting of a voltage divider having several points (R2, R3, R4, R5) or a voltage divider comprising a variable resistor.

8. The power supply device as claimed in one of claims 1 to 7, characterized in that the AC current generator (PWM) comprises means (R5, R6) for adding a DC voltage component to the AC voltage.

9. The power supply device as claimed in one of claims 1 to 8, characterized in that the AC current generator (PWM) is connected to the mains (LN) and in that it consists of a phase-shifting circuit (C3, R1) introducing a phase-shift of $\pi/2$ relative to the mains voltage, of a triangular waveform oscillator (AO1, AO2), of a voltage divider (R2, R3, R4, R5) to which the phase shifted voltage is applied, of two comparators (AO3, AO4) to which are applied, in an opposite manner to each of the adders, the triangular voltage delivered by the oscillator and the sinusoidal voltage taken off the voltage divider, and delivering width-modulated pulses phase shifted by 180° between the two outputs (S4, S5) and of a comparator having two complementary outputs (S1, S2) on which the pulse-width- modulated rectangular voltage appears, and of an inverter bridge (T1, T2) to which said outputs (S1, S2) are applied.

10. The power supply device as claimed in one of claims 1 to 8, in particular for a commutator motor, characterized in that the AC current generator (PWM) is connected to the mains via a transformer (TR), the secondary (E1, E2) of which has a midpoint (S6) determining a zero level of symmetry and between the terminals of which are connected, in series, a capacitor (C3) and a variable resistor (R7), the common terminal of which delivers a voltage whose phase shift relative to the mains voltage varies with the variable resistor (R7), this voltage being applied to an adder (6) to which is furthermore applied the voltage of a triangular-waveform oscillator (AO1, AO2), all this so as to make it possible to electronically vary the phase shift between the armature current and the field-winding current.

11. The power supply device as claimed in one of claims 1 to 8, characterized in that the AC current generator (PWM) is connected to the mains (LN) and in that it comprises a phase-shifting circuit (C3, R1) introducing a phase shift of $\pi/2$ relative to the mains voltage, a voltage divider (R7 to R11) to which the phase-shifted voltage ($V_{DC}$) is applied, a rectifier circuit (D3, C4, D4, C5) delivering two DC voltages of opposite signs ($+V_{DC}$, $-V_{DC}$), a triangular-waveform oscillator consisting of a first operational amplifier (AO5) mounted as a multi-input integrator and delivering a triangular signal, a second operational amplifier (AO6) mounted as a comparator with hysteresis, to the input of which is applied the triangular voltage of the first operational amplifier (AO5), the voltages applied to the inputs of the first operational amplifier (AO5) being the output voltage of the second operational amplifier (AO6), the positive DC voltage ($+V_{DC}$) and the phase-shifted sinusoidal voltage ($V_{DC}$), a third operational amplifier (AO7) mounted as an inverter comparator, at the inverting input of which is applied the width-modulated rectangular signal for its 180° phase shift, an amplifier (7) having two outputs (S1, S2) on which the modulated rectangular voltage appears, a switch (CM) enabling the comparator (R7) to be connected either directly to the output of the second operational amplifier (AO6) or to the output of the third operational amplifier (AO7) and an inverter bridge (T1, T2) to which the outputs (S1, S2) of the comparator are applied.

12. The power supply device as claimed in claim 11, characterized in that an active filtering circuit, comprising a fourth operational amplifier (AO8) and constituting a selective amplifier having a cutoff frequency equal to the frequency of the mains voltage, is placed between the phase-shifting circuit (C3, D1) and the voltage divider (R7, R11).

13. The power supply device as claimed in one of claims 1 to 12, characterized in that the two windings (PP, PS) have a common terminal connected to the single-phase AC source (L, N).

14. The power supply device as claimed in one of claims 1 to 12, characterized in that it comprises a Grätz bridge (D7 to D10) delivering a full-wave-rectified voltage from the voltage of the source (L, N) and with which bridge at least one filtering capacitor (C1', C2'; C10) is associated and in that the rectified voltage is applied to the inverter bridge (T1', T2'; T1', T2', T3', T4') of the current generator (PWM, T1', T2'; T2'; PWM, T1', T2', T3', T4').

15. The power supply device as claimed in claim 14, characterized in that the Grätz bridge is associated with two filtering capacitors (C1', C2'), in that the inverter bridge consists of a pair of transistors (T1', T2') and in that one of the terminals of the winding (PS) connected to the AC current source is connected to the common point of the transistors and the other terminal to the common point (N') of the capacitors (C1', C2').

16. The power supply device as claimed in claim 14, characterized in that the Grätz bridge is associated with a single filtering capacitor (C10), in that the inverter bridge comprises two pairs of transistors (T1', T2', T3', T4') mounted in a "square", to one of the "diagonals" of which is applied the rectified voltage and in that the winding (PS) connected to the AC current source constitutes the other "diagonal" of the inverter bridge.

FIG.1

FIG. 2

FIG 3

FIG.4

FIG.5

FIG.6

FIG.7

14

FIG.8

FIG.9

FIG.10

FIG.11

15

FIG.12

FIG.15

FIG.14

FIG.13

FIG.16

FIG.17

FIG.18